# EUROPEAN PATENT APPLICATION

(11) **EP 4 484 305 A1**
(43) Date of publication of application: **01.01.2025**
(21) Application number: 24184829.0
(22) Date of filing: 26.06.2024
(51) Int. Cl.: B64G 1/64, B64G 1/24, B64G 1/28

(54) **METHODS AND SYSTEMS RELATED TO SPACE TETHERS**

(30) Priority: 27.06.2023 US 202363523636 P; 28.05.2024 US 202418676459
(71) Applicant: Saltman, Alexander, Berkeley, CA 94703 (US)
(72) Inventor: Saltman, Alexander, Berkeley, CA 94703 (US)
(74) Representative: Haseltine Lake Kempner LLP

(57) **Abstract**

Methods and systems related to space systems and more specifically to tethers for space maneuverability and replated applications are disclosed herein. Specific embodiments disclosed herein improve traditional space tethers by increasing the functionality of the tether, improving the stability of the tether, and enhancing the operational reliability and durability of the tethers. A disclosed method to execute a maneuver for a tether system comprises: obtaining sensor data using a sensor; calculating, using the sensor data, a required command for an actuator to execute the maneuver; and executing the required command to execute the maneuver to traverse an intermediate node along a tether using the actuator. The center of mass of the tether system is thereby altered and the maneuver is executed.

## Description

### CROSS REFERENCE TO RELATED APPLICATIONS

This application claims the benefit of U.S. Provisional Patent Application No. 63/523,636, filed June 27, 2023, which is incorporated by reference herein in its entirety for all purposes.

### BACKGROUND

The theoretical and practical development of tethers for use in space is a subject with now several decades of history. For our purposes a tether is any extended object in space (Earth-orbit or otherwise), though usually the primary portion of the length is provided by a flexible extended string, rope or tape-like object, in tension, made of high-tensile strength materials. The tether can stay still, or be spinning, librating, or otherwise moving, but many applications are primarily achieved by spinning tethers, which create tension within the tether through the centripetal force of the spin. Spinning tethers that change the velocity and orbit of payloads have been called "momentum exchange tethers" or "bolos" in the literature.

With the occasional exception of tethers designed for electromagnetic propulsion or drag-based deorbiting, most of the literature assumes that a tether will take the form of a rope, braid or tape-like object of varying possible length (any scale from centimeters to thousands of kilometers) with satellite or spacecraft-like objects attached at the two ends. We will refer to these objects as end nodes. If the tether interacts with a separate satellite or spacecraft-like object, we will call that object a payload.

Tethers have many applications including: matching the velocity to attach to a payload (generally referred to as docking) in order to perform an operation on the payload; changing the velocity of a satellite vehicle, piece of debris or other payload either by docking with and/or undocking with the payload and/or by forces generated separately by the tether; creating "artificial gravity" in the form of centripetal or other force applied by the tether; allowing movement of payloads from one point on the tether to another (in its most developed form, even from Earth to space).

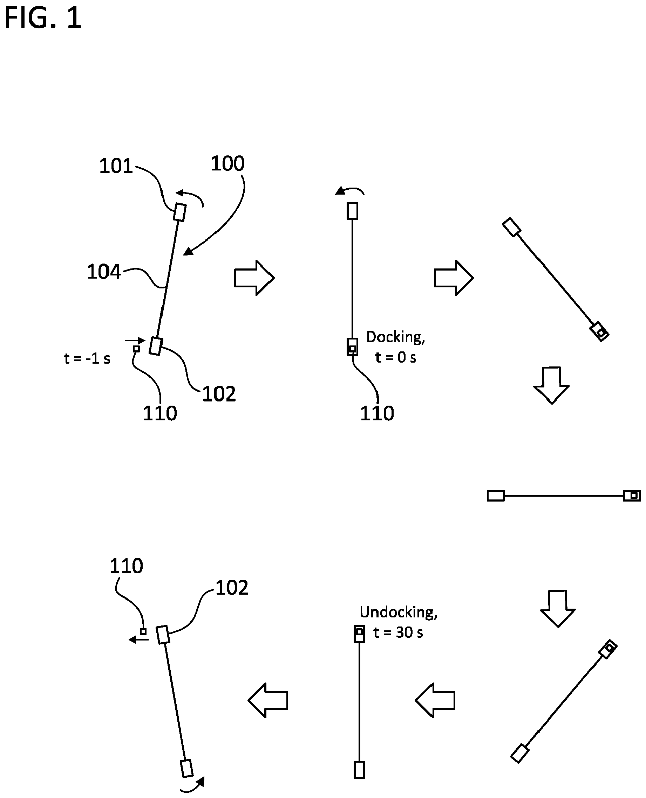

An example of one such application is shown in Figure 1. Tether system 100 comprises a tether 104 attached to two end nodes 101 and 102. The tether system rotates in this example counterclockwise in the plane of the figure at a rate of one revolution/minute. At time (t = -1 seconds), a payload 110 approaches the tether system 100. At t = 0 seconds, the payload 110 docks or otherwise attaches to end node 102. After 30 seconds, the tether system and payload have rotated to a new position, whereupon the payload is undocked from end node 102. Velocity and direction of the payload may have changed because of the momentum transfer.

There are several properties of tether operations that make them particularly attractive in comparison to traditional propulsion, primarily related to that fact that the application of force by any kind of rocket engine requires the expenditure of propellant, and the concomitant loss of propellant mass, energy, and momentum from the system. The application of force generally results in a change in velocity referred to as delta-v (Δv). Tethers have advantages over propellant based systems in that there is no loss of propellant mass, energy, and momentum in a payload as energy and momentum are transferred from the tether system. However, traditional tethers are highly inflexible in terms of what orbits they serve, are unstable, and are dependent on bringing an original source of momentum and energy from the ground.

### SUMMARY

Methods and systems related to space systems and more specifically to tethers for space maneuverability and replated applications are disclosed herein. Specific embodiments disclosed herein improve traditional space tethers by increasing the functionality of the tether, improving the stability of the tether, and enhancing the operational reliability and durability of the tethers.

Specific embodiments disclosed herein improve traditional space tethers by enhancing their functionality and increasing their operational reliability and durability using one or more intermediate nodes positioned along the length of the tether. The tethers can be fixed nodes or nodes that can traverse the tether by translating themselves along the length of the tether. As used herein the term "tether" refers to the structure that connects the intermediate nodes and any end nodes, and the term "tether system" will refer to the entire system which includes the tether and the attached nodes.

Nodes that can move along the length of the tether, either by propelling themselves along the tether while the tether remains fixed or by absorbing tether material into the node or releasing tether material from the node, can be referred to herein as traveling nodes. In these embodiments, the movement of the intermediate nodes relative to the center of mass of the tether system allow for numerous enhancements to the maneuverability of the tether system such as by providing a means for the tether system to change its orbit, change its rotational velocity or position, reduce perturbations, or engage in advanced docking maneuvers as described in the description below.

The control system which causes the translation of the one or more intermediate nodes along the tether may include one or more sensors which are capable of capturing data regarding the current state of the tether system and position of the one or more intermediate nodes, one or more processors which are able to analyze that data and determine a required direction and magnitude of movement for the one or more traveling nodes in order to effectuate a desired change of state of the tether system, and one or more actuators that are under the control of the one or more processors to move the traveling nodes accordingly.

In specific embodiments of the inventions disclosed herein, the one or more traveling nodes do not absorb or release tether material from the node (e.g., by winching or winding portions of the tether) to translate along the length of the tether, and instead the intermediate nodes propel themselves along an intact and taut tether without requiring the tether material to be substantially distorted. As used herein, the term "traversing node" is used to describe an intermediate node that can traverse along the tether in the manner described in this paragraph. These embodiments result in increased operational performance and reliability for the tether system as the tether material will undergo less stress and can be produced without the capability of being wound into a tight space as a design constraint.

In specific embodiments of the invention, certain traveling nodes rely on winching the tether into and/or out of an intermediate node; the term to describe this herein is a "non-traversing traveling node". However, the maneuverability of these systems is accordingly limited by the amount of tether material you can store at the node. The durability of these systems is limited by winching tether material in and out because winding distorts the material. The durability of these systems is limited because the intermediate node may fail and is not possible to replace without deactivating the entire tether. In contrast, in specific embodiments of the invention, traversing nodes improve the durability of the system because they can translate across the tether without distorting the tether material. They furthermore improve the durability of the system because they can be detached from the tether if they fail and a replacement node can subsequently be attached. A non-traversing traveling node appears to travel along the tether by releasing and absorbing tether material at the same rate. In specific embodiments, a non-traversing traveling node may release and absorb tether material at different rates.

In specific embodiments of the invention, additional control points are attached to a tether including one or more intermediate nodes and two end nodes. The nodes can vary in capability and can be as simple as just a small processor, a small vibration or motion-absorbing element, or a small heat exchanger. Alternatively, the nodes can have one or more spacecraft-like capabilities, including, but not limited to: position monitoring sensors (e.g. GPS); attitude knowledge sensors; attitude control mechanisms; in situ or remote sensors to examine targets in space, on planets, or parts of the tether system itself, energy gathering mechanisms, energy storage mechanisms, angular moment storage mechanisms, systems for receiving and transmitting information to other nodes, systems for absorbing vibration, systems for dissipating heat, systems on the Earth and other objects in space, conventional propulsion, and docking mechanisms that enable attachment to satellites.

In specific embodiments of the invention, a system is provided. The system comprises: a tether; an intermediate node attached to the tether; a sensor; a means for propelling the intermediate node along the tether such that the intermediate node traverses the tether; at least one processor; and at least one computer readable media storing instructions that, when executed by the one or more processors, cause the system to: (i) receive a command for a maneuver for the tether; (ii) process sensor data from the sensor; (iii) generate, using the sensor data, commands for the means for propelling to traverse the tether to achieve the maneuver.

In specific embodiments of the invention, a system is provided. The system comprises: a tether; an intermediate node attached to the tether; an actuator to traverse the intermediate node along the tether; a sensor; at least one processor; and at least one computer readable media storing instructions that, when executed by the one or more processors, cause the system to: (i) receive a command for a maneuver for the tether; (ii) process sensor data from the sensor; (iii) generate, using the sensor data, commands for the actuator to achieve the maneuver.

In specific embodiments of the invention, a method to execute a maneuver for a tether system is provided. The method comprises: obtaining sensor data using a sensor; calculating, using the sensor data, a required command for an actuator to execute the maneuver; and executing the required command to execute the maneuver to traverse an intermediate node along a tether using the actuator. These steps are executed such that the center of mass of the tether system is altered and the maneuver is executed.

### BRIEF DESCRIPTION OF THE DRAWINGS

The accompanying drawings illustrate various embodiments of systems, methods, and embodiments of various other aspects of the disclosure. A person with ordinary skills in the art will appreciate that the illustrated element boundaries (e.g., boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another and vice versa. Furthermore, elements may not be drawn to scale. Non-limiting and non-exhaustive descriptions are described with reference to the following drawings. The components in the figures are not necessarily to scale, emphasis instead being placed upon illustrating principles.
Figure 1 illustrates a tether system operation in accordance with the related art.
Figure 2 illustrates several configurations of tether systems in accordance with specific embodiments of the inventions disclosed herein.
Figure 3 illustrates certain elements that may be present on an intermediate node in accordance with specific embodiments of the inventions disclosed herein.
Figure 4 illustrates several configurations of how a traversing node attaches to a tether in accordance with specific embodiments of the inventions disclosed herein.
Figure 5 illustrates a docking operation of a payload with a tether system in accordance with specific embodiments of the inventions disclosed herein.
Figure 6 illustrates a change of angular velocity maneuver on a tether system in accordance with specific embodiments of the inventions disclosed herein.
Figure 7 illustrates a change of angular position maneuver on a tether system in accordance with specific embodiments of the inventions disclosed herein.
Figure 8 illustrates several methods of docking a payload with an intermediate node in accordance with specific embodiments of the inventions disclosed herein.
Figure 9 illustrates a torquing maneuver on a tether system in accordance with specific embodiments of the inventions disclosed herein.
Figure 10 is a flowchart showing a method of performing a maneuver using a traversing node in accordance with specific embodiments of the inventions disclosed herein.

### DESCRIPTION

Reference will now be made in detail to implementations and embodiments of various aspects and variations of systems and methods described herein. Although several exemplary variations of the systems and methods are described herein, other variations of the systems and methods may include aspects of the systems and methods described herein combined in any suitable manner having combinations of all or some of the aspects described.

Methods and systems related to tethers for space maneuverability and related applications in accordance with the summary above are disclosed in detail herein. The methods and systems disclosed in this section are nonlimiting embodiments of the invention, are provided for explanatory purposes only, and should not be used to constrict the full scope of the invention. It is to be understood that the disclosed embodiments may or may not overlap with each other. Thus, part of one embodiment, or specific embodiments thereof, may or may not fall within the ambit of another, or specific embodiments thereof, and vice versa. Different embodiments from different aspects may be combined or practiced separately. Many different combinations and sub-combinations of the representative embodiments shown within the broad framework of this invention, that may be apparent to those skilled in the art but not explicitly shown or described, should not be construed as precluded.

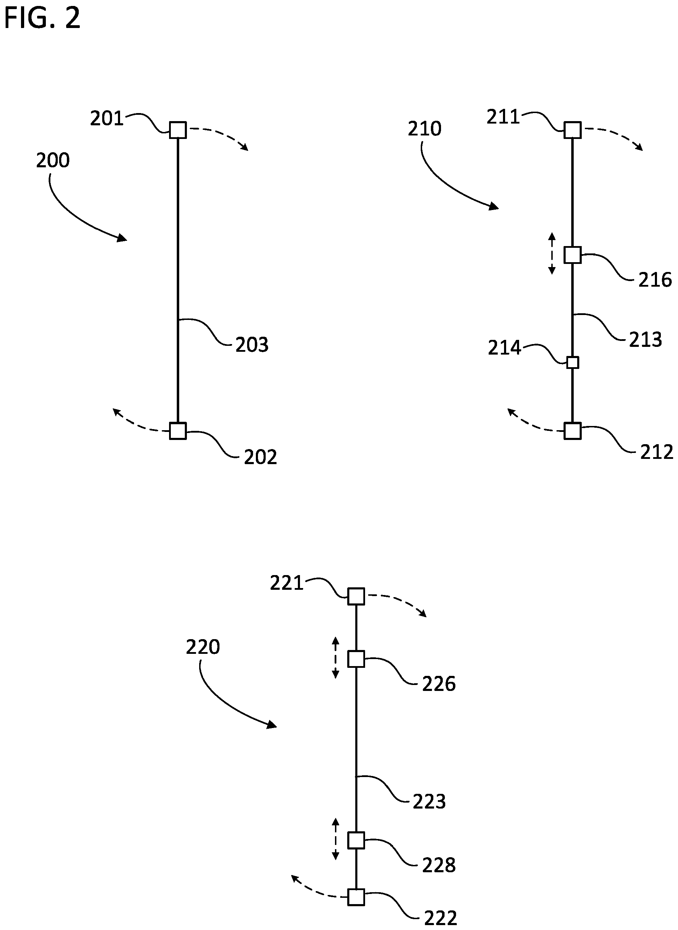

Fig. 2 illustrates a few examples of tether systems, in accordance with specific embodiments disclosed herein. Tether system 200 is similar to tether system 100; end nodes 201 and 202 are attached to a tether 203, and the system rotates in the plane of the figure. Limited maneuverability is provided by this arrangement. In specific embodiments of the invention, intermediate nodes can be added along the tether between the two end nodes. In specific embodiments, one or more of the intermediate nodes can be fixed nodes. In specific embodiments, one or more of the intermediate nodes can be traveling nodes.

Tether system 210 shows one example with two end nodes 211 and 212 attached to a rotating tether 213. Fixed node 214 is attached to the tether 213 at a certain position. Traveling node 216 may move along the length of the tether. Tether system 220 shows another example with multiple intermediate traveling nodes. End nodes 221 and 222 are attached to a rotating tether 223. Traveling nodes can be operated so that they maneuver in concert with each other (e.g. symmetric movement about the tether system center of mass). However, they can also be moved independently.

In specific embodiments of the invention, intermediate traveling nodes can be non-traversing. In specific embodiments, traveling nodes can be traversing nodes. Tether systems can be constructed to mix and match these two types of traveling nodes (i.e. a tether system could contain both traversing and non-traversing traveling nodes) or could contain all traveling nodes of one type.

In specific embodiments of the invention, fixed nodes can obtain and provide data regarding the state of the tether, improve the degree by which the tether can be controlled, and provide redundancy to failures as they can separate the location of a failure on the tether from the remainder of the tether. For example, the fixed nodes could continue to communicate with and control tether remnants in the event of a tether break.

In specific embodiments of the invention, traveling nodes can provide data regarding the state of the tether, improve control and enable the tether to change its rotation, orbit and other movements in order to access and deliver to a much wider variety of orbits, engage in debris avoidance, change the forces on attached elements, engage in more robust docking and undocking procedures, serve as additional locations in which payloads can be attached and can even add energy and momentum to the tether through concerted operations without propellant. The traveling nodes can move along the length of the tether to control the rotational velocity of the tether, minimize unwanted oscillations, control the orbit of the tether around the Earth, avoid debris, or rendezvous with a payload.

In specific embodiments of the invention, the intermediate nodes can include passive or active elements (e.g., reaction wheels, damping elements, etc.) to control twists or unwanted oscillations of the tether system or to control an orientation of the node with respect to the tether. In the case of active elements, the tether or the intermediate nodes can include sensors for detecting unwanted oscillations and providing data to the active elements to counteract such oscillations. Unwanted oscillations can be generated by payload rendezvous, movement of the active elements, external forces such as drag, solar wind or ionospheric disturbances, or other effects. Passive control elements can include damping elements that connect to one or more tether contact points and absorb vibrational energy. Damping elements can also be implemented as active elements. Active elements can cause planned movements of the node attachment contact points that directly cancel measured oscillations or twists.

In specific embodiments of the invention, the intermediate nodes can include an angular momentum control mechanism, which could comprise an angular momentum storage mechanism and/or an angular momentum creation mechanism. These mechanisms can help control the positions and orientations of the nodes, the tether and any payloads, for example by absorbing the angular momentum of a payload, or by trading angular momentum between the nodes, the tether rotation and orbital angular momentum of the system. Storage mechanisms can include reaction wheels and larger flywheels. Angular momentum creation mechanisms can include magnetorquers or other mechanisms that interact with external magnetic fields or other external particles or forces.

In specific embodiments of the invention, the intermediate nodes can include sensors for determining the state of the tether and nodes. For example, these sensors could include attitude sensors to measure node orientation, inertial sensors to measure internal and external forces, optical sensors to monitor the relative positions of the nodes and tether, displacement and strain sensors, magnetic field sensors, ranging sensors to measure distances between nodes, or global navigation satellite system (GNSS) sensors to measure absolute position in space. The sensors could obtain sensor data and the sensor data could include at least one of: attitude measurements; inertial measurements; optical data to monitor positions of the node and the tether; displacement and strain sensor measurements; magnetic field measurements; ranging and positioning measurements; and global navigation satellite system data.

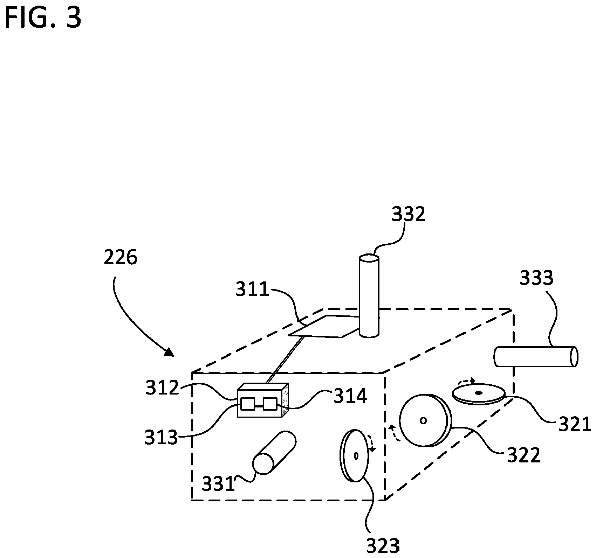

FIG. 3 shows an intermediate node (for example, node 226) with various elements in an exemplary layout. Sensors 311 may include various sensing components as outlined above. Sensors can be kept in one location of the intermediate node or can be distributed around the intermediate node as needed. Sensors 311 are connected as input to a control system 312, which can include one or more processors 313 which can send out commands for implementing maneuvers. The control system 312 can also include a non-transitory computer readable medium 314. In specific embodiments, one or more intermediate nodes can have a control system. In specific embodiments, one or more end nodes can have a control system. In specific embodiments, a control system for the entire tether system can be placed in various locations, including intermediate nodes, end nodes, or fixed nodes in the tether itself. A control system for the entire tether system can be a separate system but communicatively connected to the tether system. Angular momentum storage mechanisms may be present in the node's interior, including reaction wheels 321, 322, and 333. In this configuration, reaction wheels 321, 322, and 333 are each mounted with rotation axes perpendicular with respect to each other. Other components can be present on the exterior of the node as well, including magnetorquer rods 331, 332, and 333, which each act as an angular momentum creation mechanism.

In specific embodiments of the invention, the intermediate nodes can include sensors for examining targets in space. These can include optical or radar sensors for examining the Earth, other bodies, artificial satellites or vehicles. For example, such a system could maneuver to bring one or more nodes close to a satellite in order to use the sensors on those nodes to examine the satellite for damage or for other purposes. As another example, multiple nodes could take radar observations of the same target and the observations combined to detect motion or create three dimensional images.

In specific embodiments of the invention, the intermediate nodes can include optical, radio frequency or other transmitters. These can include radio frequency transmitters that transmit ranging signals which enable receivers to determine location (e.g., localizing the individual receivers with respect to a frame of reference) by combining observations from multiple nodes.

Fixed nodes can be fixed to the tether itself by being fastened to the tether or by being an element of the tether in that they are attached to the tether at two sides along the main axis of the tether. The fixed nodes can be fixed to the tether in such a way that the traveling nodes can pass them.

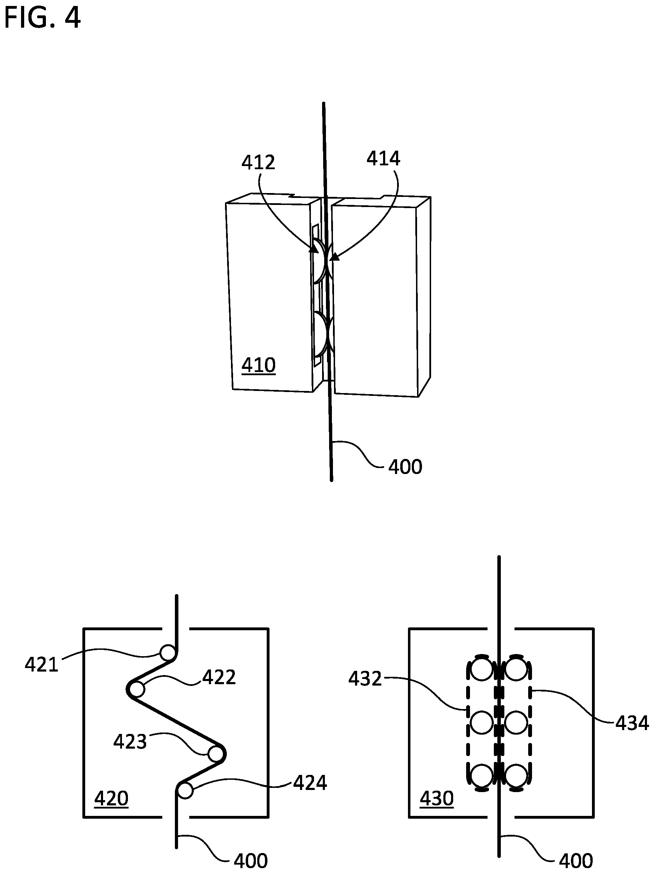

An intermediate traversing node can attach to the tether in a number of ways as illustrated in FIG. 4. For example, a portion of traversing node 410 is shown attached to a tether 400 by using one or more pairs of opposed rollers held against the tether by forces applied by the node. Two rollers 412 and 414 are one example, though additional pairs may be useful to apply forces for certain tether maneuvers. As another example, a portion of intermediate traversing node 420 as shown can be attached to a tether 400 by wrapping of the tether on two or more wheels or axles (421, 422, 423, 424) so that the tension in the tether itself creates the attaching force, much like a conventional mechanical belt that connects rotating shafts. This configuration as shown is planar, but this can be configured so that the tether has a 3-D shape within the node; this can allow in-plane and out-of-plane forces to be applied on the tether from the intermediate node. In a further example, a portion of intermediate traversing node 430 can be attached to a tether 400 with one or more treads 432 and 434. None of these examples are shown to scale, and distances among the various elements are expanded for clarity.

An intermediate traversing node can attach to the tether and traverse the tether in various ways. The traversing node could include opposing wheels on one edge of the tether, and a fixed member bracketing the other edge of the tether. The opposing wheels and bracket could be sized to keep the tether in contact with smooth surfaces of the intermediate node on either side of the tether (e.g., the device in Fig. 4 above). The traversing node could also include wheels along tracks in the tether (e.g., monorail configuration / double sided monorail). The wheels could be rotated using an internal power source or translate force applied for propulsion to movement along track. The traversing node could also include a monorail sliding configuration based on typical gas expulsion propulsion. The traversing node could be attached to the tether using a monorail sliding configuration but propelled by one or more pairs of opposing wheels or other means. The traversing node could also include rotating treads on a track in the tether. The treads could be rotated using an internal power source or translated force applied for propulsion to movement along the track. The traversing node could include gripping appendages to stay connected to the tether and to traverse the tether. The traversing node could also stay connected to the tether or traverse along the tether using magnets. The magnets could be variable magnets allowing the tether to traverse the tether in one or two directions and to stop when desired. In specific embodiments, a traversing node includes a clamping or braking mechanism to keep the node stationary relative to the tether.

In specific embodiments of the inventions disclosed herein, a means for propelling an intermediate node along a tether such that the intermediate node traverses the tether is provided. The means for propelling can be electrical, whereby stored electrical energy is used to drive a motor that powers wheels or treads to move the tether in a desired direction. The means can be mechanical using stored energy, where a flywheel can be coupled to a driving element. The flywheel can be a separate mechanism used for propulsion or could be a flywheel or reaction wheel otherwise used for angular momentum storage. A flywheel or similar mechanism used for propulsion can be aligned and spun in a direction to counterbalance a similar mechanism on a separate traveling node in the tether system, thus partially or fully offsetting any angular momentum changes these devices might produce. The means for propelling can be any mechanism using any form of rocket propulsion including gas propulsion, traditional monopropellant rocket propulsion, bipropellant rocket propulsion, cold gas thrusters, and electric, atomic, or ionic rocket propulsion. The means for propelling can be chemical, where a gas propulsion unit provides thrust to move the intermediate node along the tether.

In specific embodiments, the means for propelling an intermediate node along a tether may be separate from the way the intermediate node is attached to the tether. For example, the node may be held on the tether by opposing wheels or a wheel/bracket but driven by a tread contacting the tether, rocket propulsion, or other methods.

In specific embodiments, an intermediate node can travel opposite directions along the tether using different propulsion mechanisms. While the tether system is rotating, movement of an intermediate node toward the center of mass requires work to accomplish; since angular momentum is conserved, kinetic energy is added to the system when more mass is moved toward the center of mass. By conservation of energy, when no additional energy from outside the tether system is added during this movement, then active propulsion using stored energy can be used for this purpose. Movement of an intermediate node away from the center of mass is the opposite, where negative work is used to move the intermediate node mass. Thus, the rotational kinetic energy of the entire tether system is lowered and this energy is transferred into kinetic energy of the intermediate node. In other words, in a rotating frame of reference, the intermediate node feels a fictional centrifugal force in the direction away from the center of mass. In specific embodiments, if a clamping or braking mechanism on an intermediate node is released, the node can move away from the center of mass without additional propulsion since the centripetal force on the node is removed. In some cases, this energy can be recaptured electrically (e.g. with a generator) or mechanically (e.g. with a flywheel). Frictional or other opposing forces can be high enough that movement away from the center of mass may still require an actuator to provide additional propulsion, but nevertheless this will use less energy than moving the intermediate node in the opposite direction toward the center of mass. The latter case is more likely to occur when an intermediate node is closer to the center of mass, and the intermediate node feels less apparent force.

In specific embodiments, the intermediate nodes can travel along the tether to cause the tether system to modify its rotation.

In specific embodiments, the intermediate nodes can add energy and momentum to the system by traversing the tether. For example, the intermediate nodes could include a set of at least two intermediate nodes on either side of a center of gravity of the tether system that would move in synchronization to change the rotational inertia of the tether system.

In specific embodiments, the intermediate nodes can travel along the tether to modify its orbit. In a gravitational field, the position of the weights of the nodes along the tether can be mechanically pumped in time with the tether system rotation to change orbital characteristics. If this does not provide sufficient thrust to change the desired orbit, it can be supplemented with conventional methods, such as gas or electric propulsion, capture and/or release of other payloads, gravitational assist maneuvers, and other means.

In specific embodiments, the intermediate nodes can travel along the tether to cause the tether to engage in a superior docking procedure (e.g., by flattening out the rotation of an end node to widen the window for docking with a payload on a tangent of the orbit). The docking procedure can give the payload a longer amount of time to intercept with and interact with the end node.

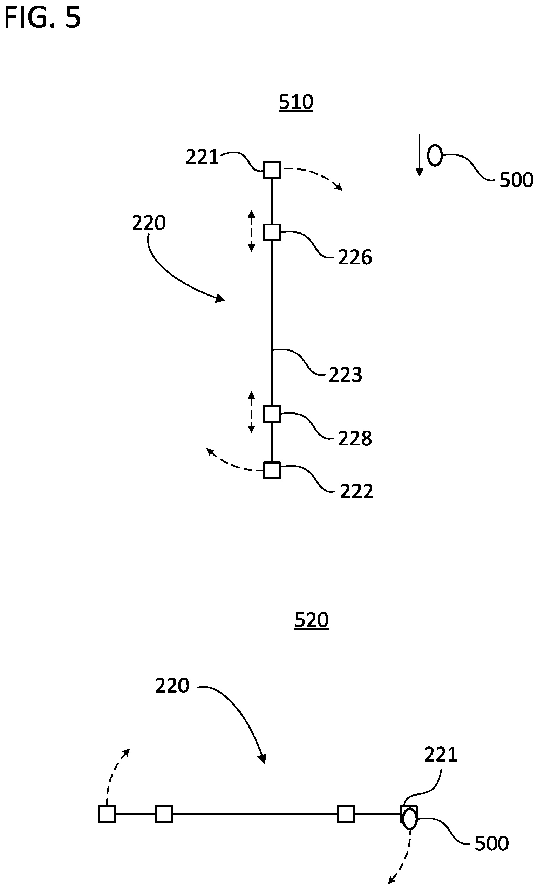

An example of this is shown in FIG. 5. View 510 shows a payload object 500 approaching a tether system 220 for docking at end node 221. Docking is much simpler when the velocities and movement direction vectors of the two objects to be docked are the same when the objects are in close proximity. In the ideal example shown here, we will assume that the tether 223 is of length 2r, where r is the radius of the tether around its center of mass. The payload 500 is approaching such that A) it will pass the tether's center of mass at a distance r at its closest point, B) it will intersect the docking node (in this case end node 221) at that closest point, C) its direction will be perpendicular to the tether at the intersection point, and D) its velocity already matches the linear velocity of the docking node 221 at the time of intersection. View 520 shows this intersection in time, space, and velocity vector, whereupon the payload can dock with the end node 221. These four conditions for docking may not need to match exactly, but they may commonly be held to less than certain tolerances. For example, if the velocity difference and angles between the docking node on the tether and the payload are sufficiently small, docking may still be able to take place. The above ideal situation could only apply with extremely careful control of the payload prior to its approach of the tether system. Some or all of these conditions can be relaxed for the speed and direction of the payload if they are instead achieved using maneuvers by the tether system.

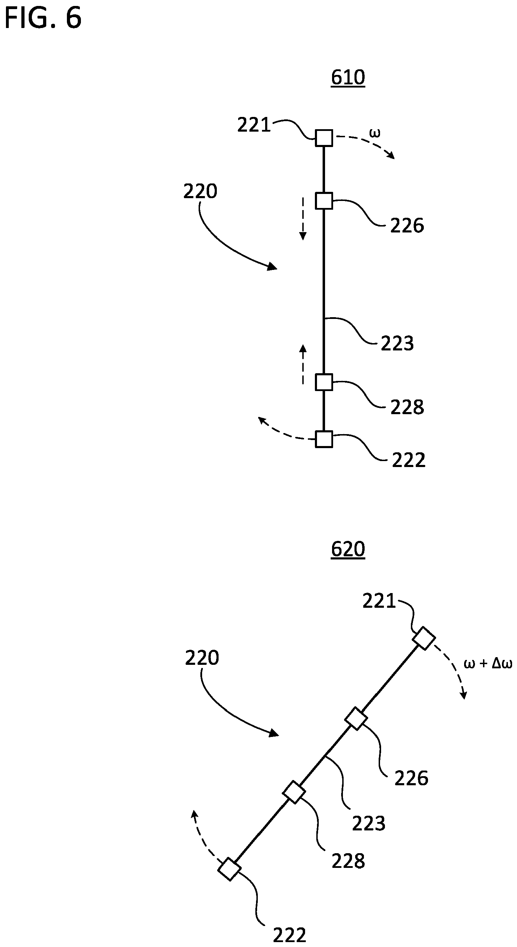

Various maneuvers can be made to prepare a tether system for docking. Each maneuver can be performed in a sequence of maneuvers, or specific maneuvers can be performed simultaneously. In specific embodiments of the invention, the maneuver of a tether system can adjust its angular velocity. For example, if a payload angular velocity with respect to the tether center of mass at intersection is not substantially identical to the initial angular velocity of the tether, the angular velocity of the tether can be changed. Much as with a figure skater bringing their arms inward to increase their rotation rate, two diametrically opposed traveling nodes can move symmetrically inward (if a higher tether angular velocity is needed), or outward (if a lower tether angular velocity is needed). By conservation of angular momentum, the desired change in angular velocity is achieved. The net result is that condition D) above can be relaxed for the payload as the angular velocity of the tether is made to match that of the payload. FIG. 6 illustrates this maneuver, where view 610 shows tether system 220 rotating at an angular velocity ω. Sensor data or other telemetry can determine that the angular velocity of a payload would be at an angular velocity ω + Δω. The traveling nodes 226 and 228 can be symmetrically moved inward toward the center of mass until the tether reaches the specified ω + Δω angular velocity, as shown in view 620. The end positions after the maneuver of the intermediate nodes may be measured based on sensor data of the angular velocity or calculated before the movement. Though the final angular velocity depends on the mass distribution of the tether system and as such the intermediate node positions, timing of the intermediate node movement as well as node movement speed can be chosen to reduce perturbations of the tether system, to effect other simultaneous maneuvers of the system, or both.

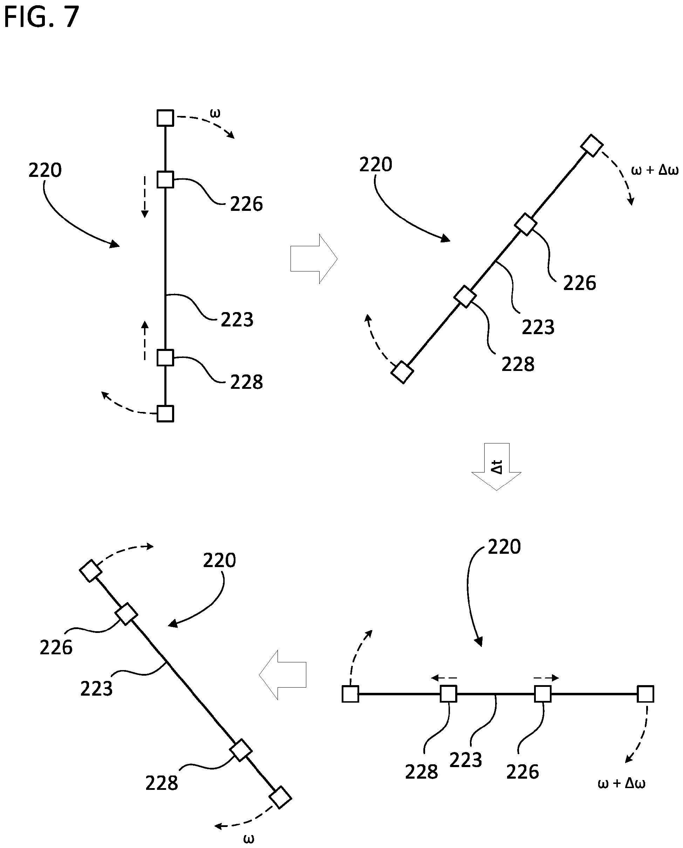

In specific embodiments of the invention, the maneuver of a tether system can adjust its angular position. The angular position of the tether at the intersection time must be such that the docking portion of the tether system actually meets the intersection point with the payload as it passes. To ensure this, for example, if the angular position of the tether would be behind the needed position, the tether can undergo an angular velocity maneuver that raises the angular velocity of the tether. This is shown in FIG. 7, where similar to FIG. 6, a tether system 220 moves two intermediate nodes 226 and 228 inward so that the angular velocity increases from ω to ω + Δω. After a time Δt, when the angular position has moved ahead enough, another angular velocity maneuver where nodes 226 and 228 are moved back outwards away from the center of mass of the system is done. In this specific case, the angular velocity of the system would be the same as before the maneuver, but its position (i.e. its rotational phase) can be different. This allows us to relax condition B) for the payload in the prior example.

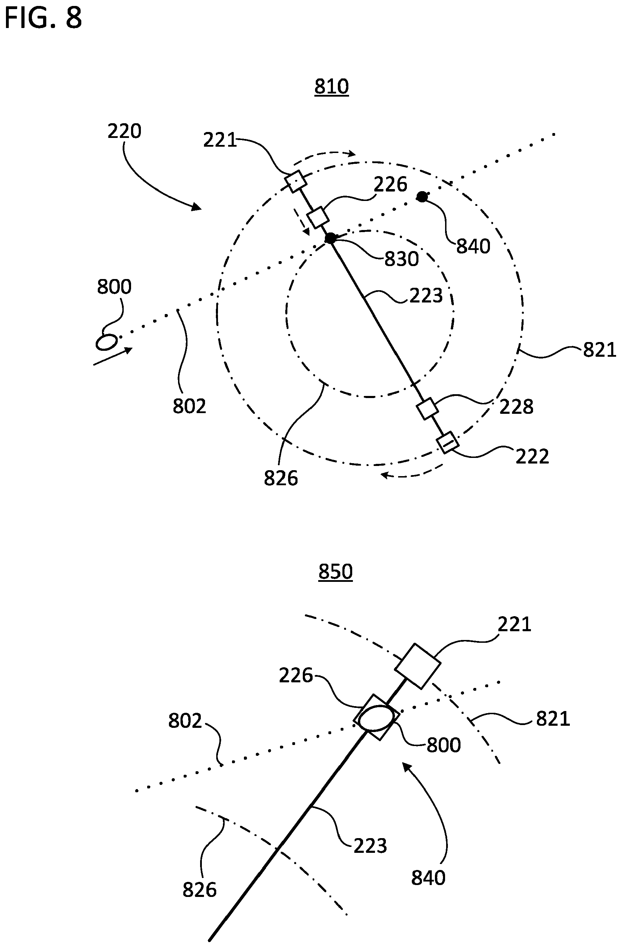

In specific embodiments of the invention, intermediate nodes can be used as docking points on the tether. In some circumstances, a payload may be approaching the tether so that it does not intersect the movement path of an end node at an angle sufficiently tangent to circle of rotation of the end node so that docking is possible. One example of this is shown in FIG. 8, view 810 showing tether system 220. In the frame of reference of the tether system, circle 821 shows the movement path of end node 221 around the center of mass of the tether system. In this example, payload 800 approaches the tether, but does not intersect the circle 821 at close to a tangent angle. As a result, the velocity direction match between the payload and the end node 221 would be poor and docking may not be possible. Instead, intermediate node 226 can be chosen as a docking point. Payload 800 has its closest approach to the center of mass when its direction vector 802 intersects circle 826 at point 830. Intermediate node 226 can move to the correct distance on the tether so that rotation circle overlaps circle 826 and the intersection point 830 for docking; there may also need to be other maneuvers to match the position and velocity of the tether system to this new intersection point as well. Intermediate node 228 can be kept stationary for this maneuver but can also be moved symmetrically with node 226 so that the center of mass remains unchanged. This allows us to relax condition A) of the earlier example on the payload, since the docking position can be closer to the center of mass than the radius.

In specific embodiments of the invention, the tether system can dock an intermediate node to a payload while the intermediate node is traveling along the tether. Consider again the example in view 810 of FIG. 8. Though point 830 may be convenient for docking, under certain conditions it may not be desirable or even possible. As described before, the angular velocity of the tether system can be increased by moving one or more traveling nodes closer to the center of mass of the tether system. However, based on the relative masses and positioning of other elements of the tether system, there can be a practical limit as to the range of angular velocities available to the tether system. In addition, an intermediate node closer to the center of rotation will have a slower linear velocity compared to a node closer to the end of the tether which can further constrain the velocity range of a payload that is able to dock with the tether system. In an example, the tether system could dock at point 840. To achieve this, using maneuvers previously described, angular velocity and position of the tether can be adjusted so that intermediate node 226 will overlap with the payload 800 in time and space at point 840. View 850 shows a close-up view of tether system 220 at a later time, where intermediate node 226 and payload 800 have intersected. The velocity vector of the payload 840 in the frame of reference of the tether system will have components in both radial and tangential directions. At this point, the angular velocity of the tether has been adjusted so that node 226 matches the tangential velocity of the payload perpendicular to the tether 223 in the rotating plane. Outward along the tether direction, the payload has a radial velocity. Because the intermediate nodes can move during this maneuver, the intermediate node 226 can be traveling along the tether with the same radial velocity as the payload. Docking can then be achieved, and thus condition C) can be relaxed for the payload.

In specific embodiments of the invention, the maneuver of a tether system can adjust the position of its center of mass. In general, any change of position of an intermediate node is a maneuver that changes the center of mass of the system with respect to the rotation axis. Previous examples showed movement of more than one intermediate node simultaneously and were illustrated so that the center of mass did not change, however these were two separate, simultaneous maneuvers that balanced out the center of mass. In specific embodiments, only one intermediate node may change positions to execute a maneuver where the center of mass changes position. In specific embodiments, two or more intermediate nodes can be moved asymmetrically to execute a maneuver where the center of mass changes position. This can be used in a docking procedure where a payload will pass the center of mass at a distance greater than the radius of the tether system. By dynamically adjusting the center of mass, additional reach can be given to one of the nodes to bring the node into range for docking.

In specific embodiments of the invention, the maneuver of a tether system can include torquing maneuvers that change the angular momentum of the tether system. Torque can be supplied by aforementioned angular momentum storage mechanisms and/or angular momentum creation mechanisms. In specific embodiments, torquing maneuvers can be performed in the plane of the tether rotation to increase or decrease the angular momentum. In specific embodiments, torquing maneuvers can be performed out of the rotational plane, which would result in a change of rotational plane of the tether system. This can assist in certain docking operations. Previous examples have shown a payload moving substantially in the rotation plane of the tether. By adjusting the rotation of the tether directly, a wider range of payload trajectories are feasible for a docking operation.

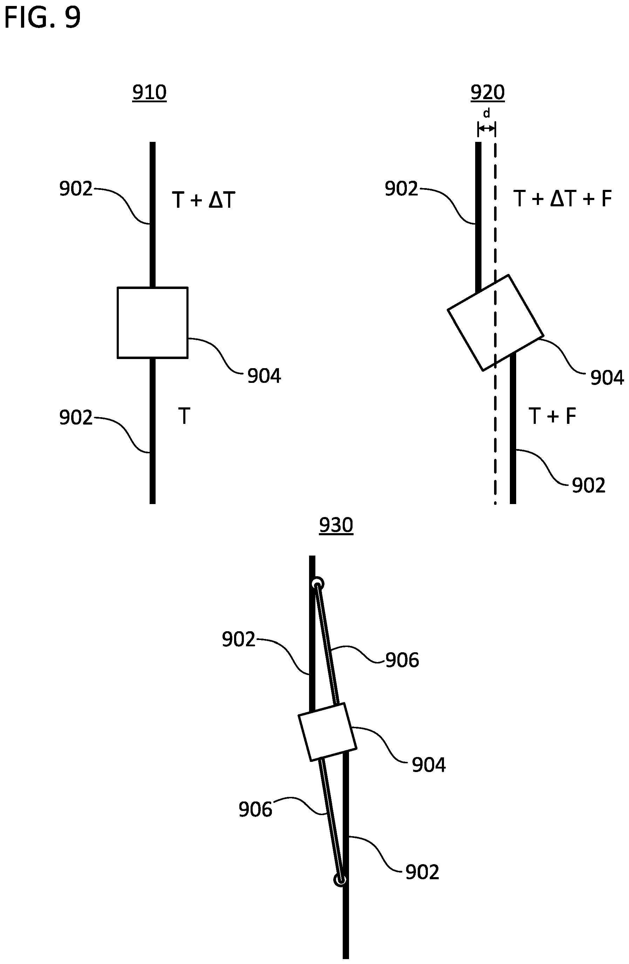

One diagrammatic example of a torquing maneuver is shown in FIG. 9. In view 910, an intermediate node 904 is shown attached to a tether 902 which is undergoing tensile force. While the tether is spinning, the node 904 experiences a net centripetal force ΔT. View 920 shows a force F induced upon the tether 902 by a change in orientation of intermediate node 904. Force F applies torque to the node and the tether, accomplishing the transfer of angular momentum from the node to the tether. The amount of torque that is available for transfer is proportional to the distance d that the lever arm of the node 904 can induce. In specific embodiments, intermediate nodes can be constructed to be long. This would enable more efficient angular momentum transfer from the node to the tether. Some nodes may be constructed with longer boom arms, for example arms 906 in view 930, that can provide additional torque to the tether. This implementation is merely exemplary; boom arms can be configured to apply torque from different directions if needed. In specific embodiments, intermediate nodes can be connected to a tether so that it may rotate around the tether and thus provide a torque both in-plane and out-of-plane. In specific embodiments, intermediate nodes can be attached to a tether where it does not rotate about the axis of the tether, but instead can transfer torque on multiple axes using multiple sources of torque (e.g. more than one angular storage mechanism on different axes, multiple torquing rods, or other means).

In specific embodiments of the invention, intermediate nodes may move to stabilize the tether. In order to predict the future position of a rotating tether and ensure perturbations do not grow large and destabilize the tether, one must be able to reduce the size of any perturbations about a desired constantly rotating state. There are many types of perturbations, and this can become complex quickly, so accurate sensing of the positions of the tether, all nodes, and addition payloads is needed. Various maneuvers of intermediate nodes can assist in damping perturbations.

Torquing maneuvers executed on a traveling node have other useful properties compared to those on a fixed node. For instance, the traveling node may be moved to a position on the tether so that the torquing maneuver is more effective (i.e., the torquing maneuver can effect a greater change in the angular momentum of the system). In specific embodiments, a torquing maneuver can be combined with movement of the traveling node along the tether. The combination of maneuvers can be simultaneous or can occur in a sequence. In specific embodiments, removing perturbations from the tether system can occur in between steps of other maneuvers, or may otherwise occur simultaneously. For example, during a first maneuver that changes angular velocity, the same or other nodes may execute a second torquing maneuver or other movement to damp perturbations caused by the first maneuver.

Depending on future needs (e.g., preparing for incoming payloads), it may be desirable to keep the tether rotating at a particular angular velocity. The tether system controller can model this using a fixed frame of reference, but it may also be convenient to model the system using a rotating frame of reference with the tether having a desired final angular velocity ω. In this frame of reference, the tether would appear to be stationary. Perturbations of this could appear as vibrations, rotational velocity, librational movement, or other movement from that stationary position. Perturbations can be removed by applying force to the system that minimizes its overall kinetic energy in this frame of reference. In a rotating frame of reference, conservation of energy does not always apply strictly, but by using an energy function that includes work done by fictitious forces, energy conservation is preserved. In a frame undergoing rotation at a fixed rate *ω* there are two fictitious forces: the Coriolis force and the centrifugal force. Because the Coriolis force always acts perpendicular to the direction of motion, it performs no work. The centrifugal force can do work and can be represented by a radial centrifugal potential energy: U = *ω*²*r*². If the nodes on a tether are not moving in a radial direction, the centrifugal energy is fixed and can be ignored, leaving only the kinetic energy of the system. Thus, forces applied from the nodes that do negative work on the tether will monotonically decrease the kinetic energy toward zero and the tether will approach a state of fixed rotation at angular velocity *ω*. In specific embodiments, forces applied from the nodes to reduce perturbations can be torquing forces. In specific embodiments, forces applied from the nodes may include changes in the tether system center of mass. One example of the latter is movement of a traveling node along the tether. This movement may be coordinated with movement by other traveling nodes as well.

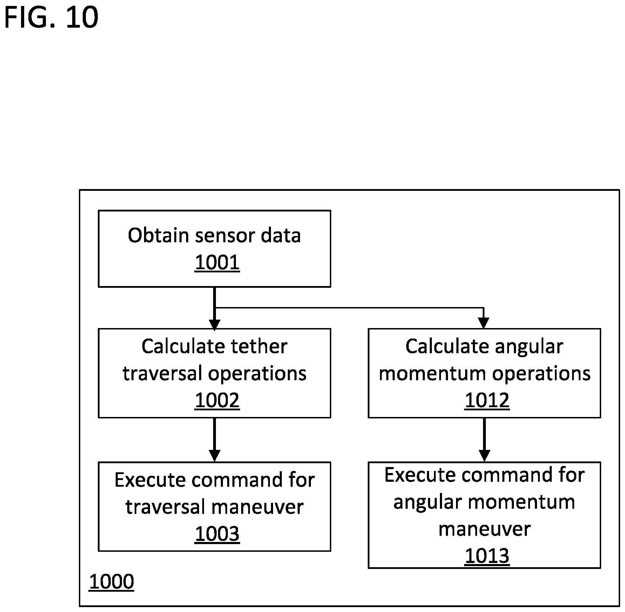

FIG. 10 shows a flowchart 1000 that describes methods of executing a maneuver on a traversing node, in accordance with specific embodiments disclosed herein. Flowchart 1000 begins with step 1001, where sensor data is obtained from various sensors in the traversing node. Sensing data from one or more sensors in the traversing node may be sufficient to plan details for an upcoming maneuver, but in many cases the maneuver will affect the entire tether system. Sensor data from other sensors in the tether system can be transmitted and received among the various nodes in the system. Sensors can capture data about the tether system as well as data about approaching spacecraft or payloads.

In step 1002 of the flowchart 1000, calculations are done by the processor to determine which operations are needed to perform a traversal maneuver. In specific embodiments, the maneuver is calculated for the traversing node performing the maneuver. In specific embodiments, the maneuver is calculated for the traversing node in concert with other maneuvers being performed at other nodes either concurrently or consecutively. Calculations can use the sensor data previously obtained to determine which characteristics of the tether system may need to be changed to effect the desired change in the system. Operations can include node position, speed, and acceleration within the range available to the actuator.

In step 1003 of the flowchart 1000, the command or commands are executed for the node to traverse the tether. In specific embodiments, a maneuver may include certain substeps if needed. For example, the traversing node may be commanded to begin moving at a certain time, accelerate its speed along the tether at a later time, and then come to a halt at a particular position.

In optional step 1012 of the flowchart 1000, calculations can be done by the processor to determine which operations are needed to perform a torquing maneuver. In specific embodiments, the same intermediate node that is traversing can also provide torque to the tether during the traversal. In specific embodiments, a node may provide torque to the system while other traversing nodes are executing a traversal maneuver. Calculations can use sensor data to determine how much and where torquing maneuvers should be applied (e.g. a torquing maneuver may be needed only after the traversing node has reached a certain point on the tether). In optional step 1013 of the flowchart 1000, the command or commands are executed for the node to perform a torquing maneuver.

Other aspects of the invention are defined in the following numbered statements:
Statement 1. A system comprising:
   a tether;
   an intermediate nodes attached to the tether;
   a sensor;
   a means for propelling the intermediate node along the tether such that the intermediate node traverses the tether;
   at least one processor; and
   at least one computer readable media storing instructions that, when executed by the one or more processors, cause the system to: (i) receive a command for a maneuver for the tether; (ii) process sensor data from the sensor; (iii) generate, using the sensor data, commands for the means for propelling to traverse the tether to achieve the maneuver.
Statement 2. A system comprising:
   a tether;
   an intermediate node attached to the tether;
   an actuator to traverse the intermediate node along the tether;
   a sensor;
   at least one processor; and
   at least one computer readable media storing instructions that, when executed by the one or more processors, cause the system to: (i) receive a command for a maneuver for the tether; (ii) process sensor data from the sensor; (iii) generate, using the sensor data, commands for the actuator to achieve the maneuver.
Statement 3. A method to execute a maneuver for a tether comprising:
   obtaining sensor data using a sensor;
   calculating, using the sensor data, a required command for an actuator to execute the maneuver; and
   executing the command to traverse an intermediate node along the tether using the actuator;
   whereby the center of gravity of the tether is altered and the maneuver is executed.
Statement 4. A system comprising:
   a tether;
   an intermediate node attached to the tether;
   a sensor;
   a means for propelling the intermediate node along the tether such that the intermediate node traverses the tether;
   at least one processor; and
   at least one computer readable media storing instructions that, when executed by the one or more processors, cause the system to: (i) receive a command for a maneuver for the tether; (ii) process sensor data from the sensor; (iii) generate, using the sensor data, commands for the means for propelling to traverse the tether to achieve the maneuver.
Statement 5. A system comprising:
   a tether;
   an intermediate node attached to the tether;
   an actuator to traverse the intermediate node along the tether;
   a sensor;
   at least one processor; and
   at least one computer readable media storing instructions that, when executed by the one or more processors, cause the system to: (i) receive a command for a maneuver for the tether; (ii) process sensor data from the sensor; (iii) generate, using the sensor data, commands for the actuator to achieve the maneuver.
Statement 6. The system of Statement 5, wherein:
   the intermediate node includes an angular momentum control mechanism.
Statement 7. The system of Statement 6, wherein:
   the at least one computer readable media stores instructions that, when executed by the one or more processors, cause the system to:
   generate, using the sensor data, commands for the angular momentum control mechanism to execute a torquing maneuver.
Statement 8. The system of Statement 6 or 7, wherein:
   the angular momentum control mechanism includes at least one of:
   an angular momentum storage mechanism; and
   an angular momentum creation system.
Statement 9. The system of any of Statements 5 to 8, wherein:
   the intermediate node is attached to the tether by at least one of:
   one or more pairs of opposing rollers;
   a tread on a track; and
   the tension of the tether against a plurality of rollers.
Statement 10. The system of any of Statements 5 to 9, wherein:
   the actuator traverses the intermediate node along the tether using a rocket propulsion mechanism.
Statement 11. The system of any of Statements 5 to 9, wherein:
   the actuator traverses the intermediate node along the tether using an electric motor to drive one or more wheels or treads.
Statement 12. The system of any of Statements 5 to 9, wherein:
   the actuator traverses the intermediate node along the tether using stored mechanical energy to drive one or more wheels or treads.
Statement 13. The system of any of Statements 5 to 9, wherein:
   the actuator traverses the intermediate node along the tether and away from the tether system center of mass using rotational kinetic energy of the tether system.
Statement 14. The system of any of Statements 5 to 13, wherein the sensor includes at least one of:
   an attitude sensor;
   an inertial sensor;
   an optical sensor to monitor positions of the intermediate node and the tether;
   a displacement and strain sensor;
   a magnetic field sensor;
   a ranging sensor; and
   a global navigation satellite system sensor.
Statement 15. A method to execute a maneuver for a tether system comprising:
   obtaining sensor data using a sensor;
   calculating, using the sensor data, a required command for an actuator to execute the maneuver; and
   executing the required command to execute the maneuver to traverse an intermediate node along a tether using the actuator;
   whereby the center of mass of the tether system is altered and the maneuver is executed.
Statement 16. The method of Statement 15, further comprising:
   calculating, using the sensor data, a required command for an angular momentum control mechanism to execute the maneuver; and
   executing the required command for the angular momentum control mechanism to change the angular momentum of the tether system.
Statement 17. The method of Statement 16, wherein:
   executing the required command to change the angular momentum before executing the required command to traverse the intermediate node along a tether using the actuator.
Statement 18. The method of any of Statements 15 to 17, wherein:
   the intermediate node is attached to the tether by at least one of:
   one or more pairs of opposing rollers;
   a tread on a track; and
   the tension of the tether against a plurality of rollers.
Statement 19. The method of any of Statements 15 to 18, wherein the actuator traverses the intermediate node along the tether by:
   propelling the intermediate node using a rocket propulsion mechanism.
Statement 20. The method of any of Statements 15 to 18, wherein the actuator traverses the intermediate node along the tether by:
   using an electric motor to drive one or more wheels or treads.
Statement 21. The method of any of Statements 15 to 18, wherein the actuator traverses the intermediate node along the tether by:
   using stored mechanical energy to drive one or more wheels or treads.
Statement 22. The method of any of Statements 15 to 18, wherein the actuator traverses the intermediate node along the tether and away from the tether system center of mass by:
   using rotational kinetic energy of the tether system.
Statement 23. The method of any of Statements 15 to 22, wherein the sensor data includes at least one of:
   attitude measurements;
   inertial measurements;
   optical data to monitor positions of the intermediate node and the tether;
   displacement and strain sensor measurements;
   magnetic field measurements;
   ranging and positioning measurements; and
   global navigation satellite system data.

While the specification has been described in detail with respect to specific embodiments of the invention, it will be appreciated that those skilled in the art, upon attaining an understanding of the foregoing, may readily conceive of alterations to, variations of, and equivalents to these embodiments. Any of the method steps discussed above can be conducted by a processor operating with a computer-readable non-transitory medium storing instructions for those method steps. The computer-readable medium may be memory within a personal user device or a network accessible memory. These and other modifications and variations to the present invention may be practiced by those skilled in the art, without departing from the scope of the present invention, which is more particularly set forth in the appended claims.

## Claims

1. A system (100) comprising:
a tether (104; 203; 400; 902);
an intermediate node (226; 904) attached to the tether (104; 203; 400; 902);
an actuator to traverse the intermediate node (226; 904) along the tether (104; 203; 400; 902);
a sensor (311);
at least one processor (313); and
at least one computer readable media storing instructions that, when executed by the one or more processor (313), cause the system (100) to: (i) receive a command for a maneuver for the tether (104; 203; 400; 902); (ii) process sensor (311) data from the sensor (311); (iii) generate, using the sensor (311) data, commands for the actuator to achieve the maneuver.

2. The system (100) of claim 1, wherein:
the intermediate node (226; 904) includes an angular momentum control mechanism.

3. The system (100) of claim 2 wherein:
the at least one computer readable media stores instructions that, when executed by the one or more processor (313), cause the system (100) to:
generate, using the sensor (311) data, commands for the angular momentum control mechanism to execute a torquing maneuver.

4. The system (100) of claim 2 or 3, wherein:
the angular momentum control mechanism includes at least one of:
an angular momentum storage mechanism; and
an angular momentum creation system.

5. The system (100) of any of claims 1 to 4, wherein:
the intermediate node (226; 904) is attached to the tether (104; 203; 400; 902) by at least one of:
one or more pairs of opposing rollers (412; 414);
a tread (432; 434) on a track; and
the tension of the tether (104; 203; 400; 902) against a plurality of rollers (412; 414).

6. The system (100) of any of claims 1 to 5, wherein:
the actuator traverses the intermediate node (226; 904) along the tether (104; 203; 400; 902) using an electric motor to drive one or more wheels (321; 322; 333) or treads (432; 434).

7. The system (100) of any of claims 1 to 5, wherein:
the actuator traverses the intermediate node (226; 904) along the tether (104; 203; 400; 902) using stored mechanical energy to drive one or more wheels (321; 322; 333) or treads (432; 434).

8. The system (100) of any of claims 1 to 5, wherein:
the actuator traverses the intermediate node (226; 904) along the tether (104; 203; 400; 902) and away from the tether (104; 203; 400; 902) system (100) center of mass using rotational kinetic energy of the tether (104; 203; 400; 902) system (100).

9. A method (1000) to execute a maneuver for a tether (104; 203; 400; 902) system (100) comprising:
obtaining (1001) sensor data using a sensor (311);
calculating (1002), using the sensor data, a required command for an actuator to execute the maneuver; and
executing (1003) the required command to execute the maneuver to traverse an intermediate node (226; 904) along a tether (104; 203; 400; 902) using the actuator;
whereby the center of mass of the tether (104; 203; 400; 902) system (100) is altered and the maneuver is executed.

10. The method (1000) of claim 9, further comprising:
calculating (1012), using the sensor (311) data, a required command for an angular momentum control mechanism to execute the maneuver; and
executing (1013) the required command for the angular momentum control mechanism to change the angular momentum of the tether (104; 203; 400; 902) system (100).

11. The method (1000) of claim 10, wherein:
executing (1013) the required command to change the angular momentum before executing (1003) the required command to traverse the intermediate node (226; 904) along a tether (104; 203; 400; 902) using the actuator.

12. The method (1000) of any of claims 9 to 11, wherein:
the intermediate node (226; 904) is attached to the tether (104; 203; 400; 902) by at least one of:
one or more pairs of opposing rollers (412; 414);
a tread (432; 434) on a track; and
the tension of the tether (104; 203; 400; 902) against a plurality of rollers (412; 414).

13. The method (1000) of any of claims 9 to 12, wherein the actuator traverses the intermediate node (226; 904) along the tether (104; 203; 400; 902) by: using an electric motor to drive one or more wheels (321; 322; 333) or treads (432; 434).

14. The method (1000) of any of claims 9 to 12, wherein the actuator traverses the intermediate node (226; 904) along the tether (104; 203; 400; 902) by:
using stored mechanical energy to drive one or more wheels (321; 322; 333) or treads (432; 434).

15. The method (1000) of any of claims 9 to 12, wherein the actuator traverses the intermediate node (226; 904) along the tether (104; 203; 400; 902) and away from the tether (104; 203; 400; 902) system (100) center of mass by:
using rotational kinetic energy of the tether (104; 203; 400; 902) system (100).
